# EUROPEAN PATENT APPLICATION

(11) **EP 1 645 986 A1**
(43) Date of publication of application: **12.04.2006**
(21) Application number: 05252037.6
(22) Date of filing: 31.03.2005
(51) Int. Cl.: G06F 21/00

(54) **User authentication apparatus, electronic equipment, and user authentication program**

(30) Priority: 08.10.2004 JP 2004296980
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Okamura, Sagiri, c/o Fujitsu Frontech Limited, Inagi-shi, Tokyo 206-8555 (JP); Awatxu, Kiyotaka, c/o Fujitsu Frontech Limited, Inagi-shi, Tokyo 206-8555 (JP); Kishino, Takumi, c/o Fujitsu Frontech Limited, Inagi-shi, Tokyo 206-8555 (JP); Higashiura, Tasuyuki, c/o Fujitsu Frontech Limited, Inagi-shi, Tokyo 206-8555 (JP); Kudo, Takahiro, c/o Fujitsu Terminal Systems Ltd., Maebashi-shi, Gunma 371-0855 (JP); Makino, Toshinori, Dai Nippon Printing Co., Ltd, Tokyo 162-8001 (JP)
(74) Representative: Stebbing, Timothy Charles

(57) **Abstract**

A user authentication apparatus (10) includes: means (145) for storing biometric authentication information obtained from a user; means (11) for communicating with electronic equipment, which authenticates the user with the user's biometric authentication information; means for sending, in response to a first inquiry from the electronic equipment, store location definition information, which defines store locations of various output information; and output means for outputting, in response to a read request sent from the electronic equipment to designate a store location defined by the store location definition information, the output information along with identification information which indicates the type of the output information. The output means outputs, to an external device,as one type of output information, along with identification information, authentication information store location information (144), which describes in a given format where authentication information including the biometric authentication information (145) is stored.

## Description

The present invention relates to a user authentication apparatus.

At present, standardization of IC cards is being taken care of by International Organization for Standardization (ISO), internationally. Domestically, Japanese Standards Association is working on making IC cards conform to JIS standards. Also, various business communities in Japan, such as Japanese Bankers Association, have separately formulated their own specifications. Those specifications define, for instance, a command interface for data exchange between an IC card and a terminal that accesses the IC card.

To give an example, one of command interfaces that have been proposed for connection between an IC card and a terminal accessing the IC card works as follows:
(1) The terminal sends a GPO (Get Processing Option) command to the IC card to activate processing.
(2) The IC card sends, in response, an AFL (Application File Locator) to the terminal. An AFL is information defining the location where data to be read next is stored.
(3) The terminal sends a data read request to the IC card. The read request designates the address (a file number, a read record number, the read record count) of the data store location contained in the AFL.
(4) The IC card sends read data to the terminal in response. The read data contains the length of the read data and a numerical value. The terminal identifies the type of the read data by a tag.
(5) The steps (3) and (4) are repeated as many times as the number of addresses contained in the AFL.

According to this procedure, the terminal makes a read request while designating an address that has been contained in the AFL, and identifies data obtained in response by a tag of the obtained data. In short, the terminal reads data at the initiative of and under the control of the IC card, and then recognizes the type and value of the obtained data.

The IC card and the terminal exchange data through this procedure with the IC card playing a leading role. Examples of data exchanged between the IC card and the terminal include an authentication code for enabling the IC card to authenticate the terminal, electronic money information, and credit information. The IC card and the terminal first check the validity of each other and, after the authentication is completed, exchange important information such as electronic money information or credit information.

For IC card authentication, methods utilizing biometric authentication information of the holder of an IC card have been proposed. Biometric authentication information is, for example, the pattern of veins on a palm, fingerprints, voice, or iris patterns. Such biometric authentication information associates an IC card with the owner of the IC card surely and securely.

For instance, a terminal is equipped with a biometric authentication information detector to detect biometric authentication information of the holder of an IC card. When the detected biometric authentication information matches biometric authentication information that has been stored in advance in the IC card, the holder is identified as the legitimate owner of the IC card.

Biometric authentication information is in general a large amount of information, and takes a longer time to read than PIN (Personal Identification Number). Accordingly, it takes very long for the combination of an AFL and a read command designating an address set in the AFL, which has conventionally been used to read information from a standard IC card to a terminal, to read biometric authentication information. The reading procedure using AFL will need a particularly vast span of time if it is executed to read such an IC card that stores several types of biometric authentication information.

### [Patent document 1] JP 2001-43323 A

In conclusion, a command interface between a standard IC card, or other similar user authentication apparatus, and a terminal as those described above is not suitable for authentication that uses biometric authentication information.

It is therefore desirable to provide a technology for reading, with efficiency, information from an IC card or other similar user authentication apparatus. The present invention utilizes this reading technology to provide an efficient biometric authentication technology.

In view of the above problems, the present invention employs the following means. That is, the present invention relates to a user authentication apparatus including: a unit storing biometric authentication information; a unit communicating with electronic equipment which checks the validity of user's biometric authentication information; a unit sending, in response to a first inquiry from the electronic equipment, store location definition information which defines store locations of various output information; and an output unit outputting, in response to a read request from the electronic equipment which designates a store location defined by the store location definition information, the output information along with identification information which indicates the type of the output information, in which the output unit outputs, to the electronic equipment, as one of the output information, authentication information store location information which describes in a given format where authentication information including the biometric authentication information is stored, along with identification information indicating the authentication information store location information.

According to the present invention, the output means outputs, to an external device as one kind of output information, authentication information store location information which describes in a given format where authentication information including the biometric authentication information is stored. Receiving the authentication information store location information, the electronic equipment follows the given format to recognize where the authentication information is stored, and thus can read the authentication information efficiently.

Further, the present invention also may provide electronic equipment including: a unit detecting user's biometric authentication information; a unit communicating with a user authentication apparatus which is used in user authentication; a unit obtaining, from the user authentication apparatus, store location definition information which defines store locations of various information; a unit requesting the user authentication apparatus to provide information while designating a store location which is defined in the store location definition information; and an information reading unit obtaining, as the result of the request, from the user authentication apparatus, the information and identification information which indicates an information type, in which the information reading unit obtains, as one of the information, authentication information store location information which describes in a given format where authentication information including the biometric authentication information that has previously been obtained is stored, along with identification information indicating the authentication information store location information, and the information reading unit reads the biometric authentication information out of the user authentication apparatus in accordance with the authentication information store location information.

According to the present invention, the information reading unit obtains, as one kind of information, authentication information store location information which describes in a given format where authentication information including the biometric authentication information that has previously been obtained is stored. The information reading means reads the biometric authentication information out of the user authentication apparatus in accordance with the authentication information store location information. The electronic equipment can thus read biometric authentication information efficiently.

The present invention may provide electronic equipment with a requesting unit, when obtains, as one of the information, authentication information store location information describing in a given format where authentication information including the biometric authentication information that has previously been obtained is stored, along with identification information indicating the authentication information store location information, which designates the location where the biometric authentication information is stored in accordance with the authentication information store location information, and which asks the user authentication apparatus to check the detected biometric authentication information against biometric authentication information stored in the designated location.

The invention further provides a method in which a computer having a biometric authentication information creating unit, a computer communicable with the former computer, or other type of apparatus or machine executes any of the processing described above. The invention may be in the form of a program causing a computer having a biometric authentication information creating unit, a computer communicable with the former computer, or other type of apparatus or machine to execute any one of the processing described above. There may further be provided a recording medium which stores the program readable by the computer or other type of apparatus or machine described above. A user authentication apparatus according to the present invention may be an IC card.

The present invention can provide a technology for reading information from an IC card or other similar user authentication apparatus with efficiency. Application of this technology makes efficient biometric authentication possible.
In the drawing:
FIG.1 is a configuration diagram of an information system according to an embodiment of the present invention;
FIG.2 is a diagram showing the internal configuration of an IC card;
FIG.3 is a diagram showing the data configuration of an AFL;
FIG.4 is a diagram showing the data configuration of an authentication information read table;
FIG.5 is a diagram outlining a procedure of reading data out of an IC card; and
FIG.6 is a diagram outlining a procedure of asking an IC card to perform authentication information.

Described below with reference to the drawings is an information system according to the best mode of carrying out the present invention (hereinafter referred to as embodiment). The configuration of the following embodiment is merely an exemplification, and the present invention is not limited thereto.

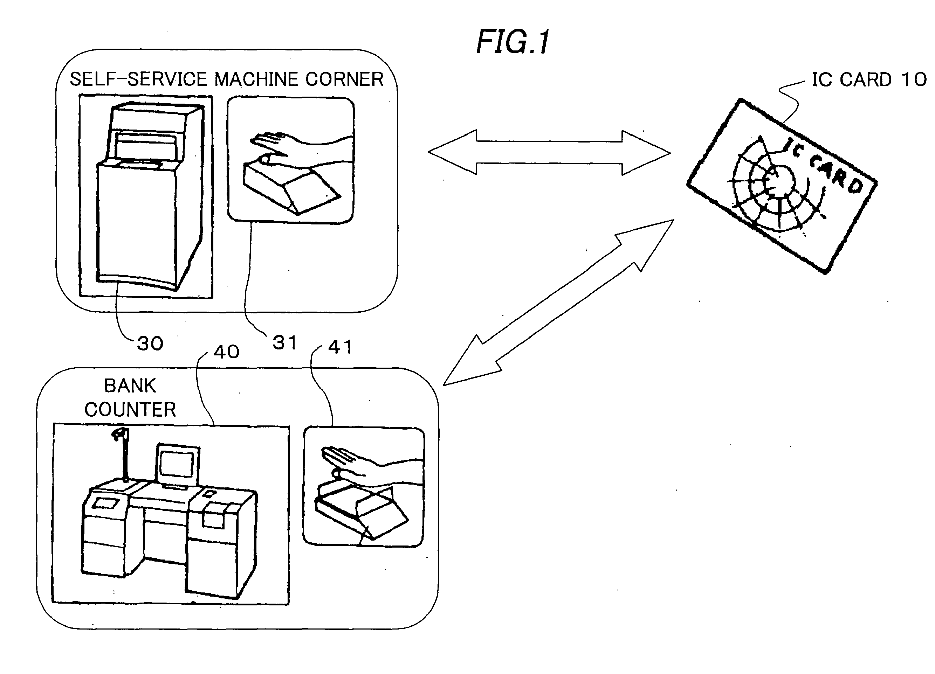

<System Configuration>
FIG. 1 is a configuration diagram of an information system according to the embodiment of the present invention. The information system described in this embodiment is for assisting banking operations. However, note that banking operations are not the only application of the present invention.

This information system includes an ATM (automated teller machine) 30 installed in a self-service machine corner of a bank and a counter terminal 40 set up at a bank counter. The ATM 30 and the counter terminal 40 each have, inside their card insertion slots which are not shown in the drawing, an input/output interface for an IC card 10. When the IC card 10 is inserted through the not-shown insertion slots, the ATM 30 and the counter terminal 40 communicate with the IC card 10 to obtain various information stored in the IC card 10. Communications between the IC card 10 and the terminals 30 and 40 employ a contact communication protocol regulated by ISO/IEC 7816 or the like, or are non-contact communications utilizing radio waves.

The ATM 30 and the counter terminal 40 have image pick-up units (corresponding to a unit detecting user's biometric authentication information of the present invention) 31 and 41, respectively. The image pick-up units 31 and 41 pick up, when a hand is held over them, a blood vessel image to create biometric information (corresponding to biometric authentication information of the present invention) from the picked-up data, and give the biometric information to the ATM 30 and the counter terminal 40, respectively. Hereinafter, the ATM 30 and the counter terminal 40 are collectively referred to as terminal (corresponding to an electronic equipment of the present invention).

A customer who wants to receive various services of the bank first sets up a bank account and has the IC card 10 issued to him as a cash card. After the IC card 10 is issued, the customer registers his biometric authentication information at the bank counter. Shown here is an example of employing biometric information based on an image of blood vessels on the customer's palm as biometric authentication information. To register, the customer inserts the IC card 10 in the counter terminal 40 and holds his hand over the image pick-up unit 41 provided in the counter terminal 40. Biometric information of his hand is thus registered in the IC card 10.

Once the biometric authentication information is registered in the IC card 10, the customer can receive services including deposit and withdrawal by inserting the IC card in the ATM 30 and identifying himself with his hand held over the image pick-up unit 31, which is provided in the ATM 30. Employable biometric authentication information other than biometric information based on a blood vessel image includes fingerprints, iris patterns, and facial features.

The ATM 30 and the counter terminal 40 are each connected via a network to a bank online system (not shown in the drawing) which processes various banking operations. In the description here, the processing by the bank online system connected to the ATM 30 and the counter terminal 40 is included in terminal functions. The ATM 30 and the counter terminal 40 for use in bank counter operations are distinguished from each other in the description here, but may instead be one terminal that performs the processing of the two.

In either case, the terminal has a not-shown CPU, memory, input/output interface, and communication interface. The terminal executes a program loaded onto the memory to assist banking operations, customers' use of their accounts, and the like. The terminal obtains biometric information of a customer, for example, an image of blood vessels on his palm, from the image pick-up unit 31 or 41 connected via the input/output interface. From the blood vessel image, the terminal creates biometric authentication information. The terminal obtains, via the input/output interface (corresponding to a unit communicating with a user authentication apparatus according to the present invention), biometric authentication information stored in the IC card 10. The terminal checks the biometric authentication information created from the blood vessel image, which is obtained from the image pick-up unit 31 or 41, against the biometric authentication information stored in the IC card 10 to authenticate the customer.

### <Internal Configuration of IC Card>

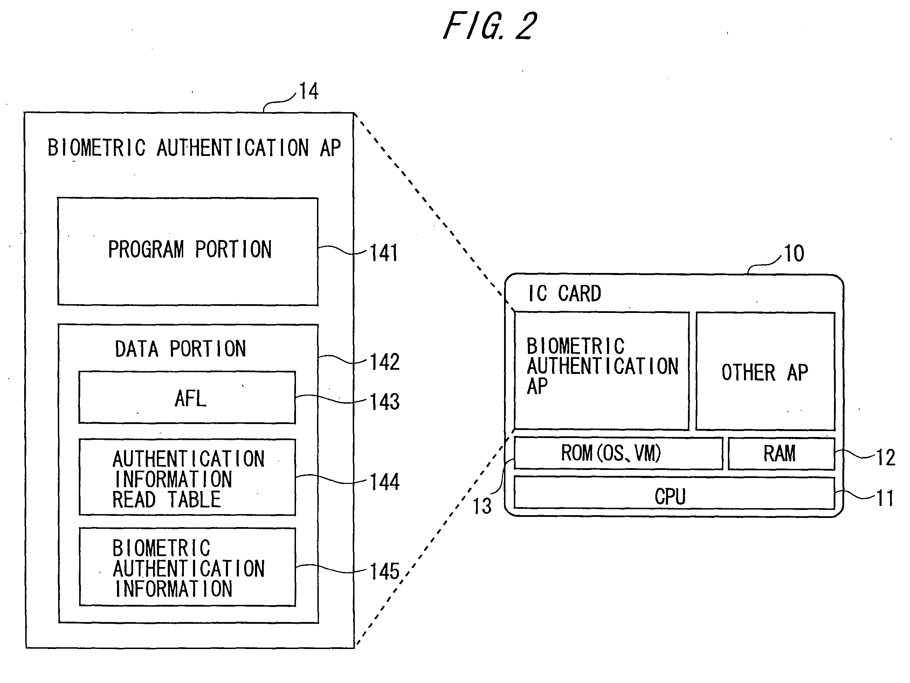

The internal configuration of the IC card 10 (corresponding to a user authentication apparatus of the present invention) is described next with reference to FIG. 2. FIG. 2 is a diagram showing the internal configuration of the IC card 10.

The IC card 10 is composed of a CPU 11, a RAM 12, a ROM 13, an interface (not shown in the drawing) and others. The IC card 10 also contains a not-shown communication interface (corresponding to a unit communicating with a electronic equipment of the present invention) for communications with the terminal. The CPU 11 performs a diversity of processing by reading and running various programs that are stored in the ROM 13.

The RAM 12 contains a non-volatile memory (corresponding to biometric authentication information storing means of the present invention) to store biometric authentication information of the customer. Alternatively, biometric authentication information of the customer may be stored in a rewritable ROM if the ROM 13 contains the rewritable ROM.

The programs executed by the CPU 11 include a biometric authentication information application (hereinafter referred to as biometric authentication AP) 14 and other application programs.

The biometric authentication AP 14 performs processing of registering biometric authentication information of a customer in the IC card 10, and processing of identifying a customer with the use of the customer's biometric authentication information registered in the IC card 10.

To perform the processing, the biometric authentication AP 14 of the IC card 10 in this embodiment contains a program portion 141 and a data portion 142, for example. The program portion 141 stores programs for executing the respective processing of the biometric authentication AP 14 described above. The stored programs perform the biometric authentication information registration processing which takes place between the terminal and the IC card 10, and the authentication processing which uses biometric authentication information and which takes place between the terminal and the IC card 10, and control operation and shut-down of each processing.

The data portion 142 is composed of an AFL storing portion 143, an authentication information read table storing portion 144, a biometric authentication information storing portion 145, and the like. In the AFL storing portion 143, locations in the IC card 10 where various programs necessary to execute the application programs are stored are defined in the form of AFL (corresponding to store location definition information of the present invention). The authentication information read table storing portion 144 defines store locations of authentication information necessary for various authentication processing. The biometric authentication information storing portion 145 stores customer's biometric authentication information necessary for biometric authentication.

<Outline of Processing of Reading Information in IC Card 10>
In general, information in the IC card 10 is read at a start-up instruction from the terminal. A tag (corresponding to identification information of the present invention) is attached to the information, and the terminal identifies the type of the read information from the tag. Normally, information that is read first is table configuration information called an AFL (Application File Locator). An AFL is a table which lists up locations of information to be read next.

On recognizing that the AFL has been read, the terminal designates information contained in the AFL as information to be read next, and executes read commands one after another. The terminal thus obtains information from the IC card 10 in succession. In this case, it is not until after information is read that the terminal identifies from tag attached to the information what information is read. This processing provides versatile control of information reading between the terminal and the IC card 10.

In addition to the information reading with the use of AFL, the information system of this embodiment utilizes an authentication information read table for reading authentication information. The IC card 10 receives a read command from the terminal and sends, in response, the authentication information read table at a given response timing.

The authentication information read table defines store locations of various authentication information in an order that conforms to a given rule. This enables the terminal to read, once the terminal obtains the authentication information read table, authentication information from the IC card 10 by designating the store location of necessary information.

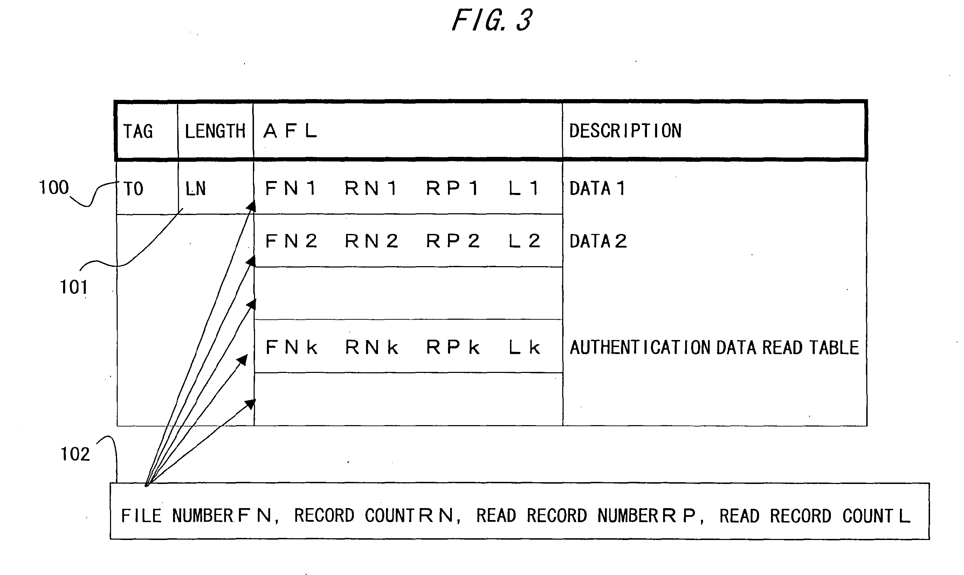

<Data Configuration>
FIG. 3 shows the data configuration of an AFL. An AFL is composed of a tag 100, a length 101, and a combination of AFL rows. The tag 100 is information indicating the type of information in question and, when this information is an AFL, a bit pattern that represents AFL is set as the tag 100. The length of this information is set as the length 101.

AFL rows 102 each indicate the location where information to be read next is stored. As shown in FIG. 3, each AFL row has a file number FN, a record count RN, read record number RP, and read record count L.

The file number FN is a number to identify a file that stores information to be read next. The record count RN is the total count of records held in the file. The read record number RP is a record number indicating the start point to start reading records in the file.
The read record count L shows how many records are to be read counting from the read start record number RP.

An AFL defines in this manner information to be read in each AFL row. For example, the first AFL row is for management information, and defines the store location of information used to manage various information in the IC card 10. The next AFL row defines, for example, the location where personal information of the owner of the card is stored. AFL rows merely show store locations of information to be read next, and what that information is (whether it is management information, or card owner information, or other type of information) remains unknown until the information is read by the terminal. The terminal follows definitions in AFL rows to read information in succession, and identifies the type of the read information from the head tag of the information.

According to the IC card 10 of this embodiment, the store location of the authentication information read table is contained in such AFL rows.

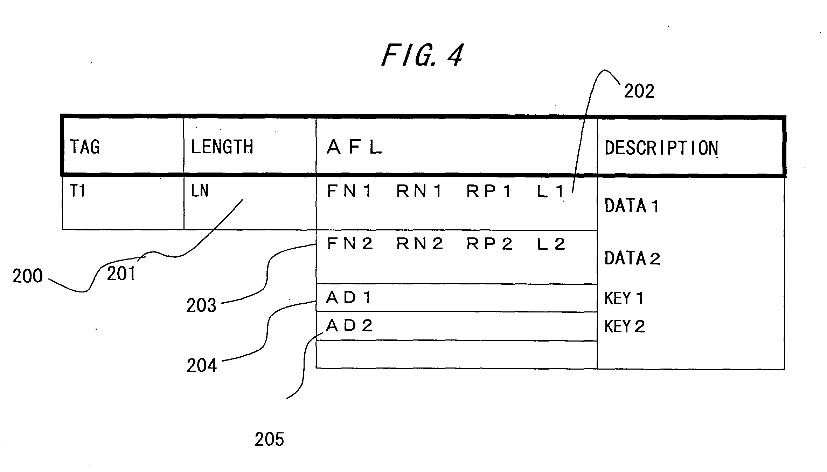

FIG. 4 shows the data configuration of the authentication information read table (corresponding to authentication information store location information of the present invention). The authentication information read table is similar in configuration to the AFL of FIG. 3, and has a tag 200, a length 201, and a combination of AFL rows. In the authentication information read table, each AFL row defines the store location of information determined in advance.

In the example of FIG. 4, a first AFL row defines the store location of Data One, for example, authentication information based on a customer's blood vessel image. A second AFL row 203 defines the store location of Data Two, for example, other authentication information. A third AFL row 204 holds the address of Key One, for example, an authentication key. An authentication key is stored in a file by itself, and therefore only a file number is defined in the AFL row 204.

A fourth AFL row 205 holds the address of Key Two, for example, other authentication key.

As has been described, in the case of the authentication information read table, the type of information stored in a store location that is defined in each AFL row is determined in advance. This enables the terminal to, once the authentication information read table is read by the terminal, access desired information in accordance with what is determined by the authentication information read table. In other words, in access with the use of the authentication information read table, the terminal decides in advance which information is necessary, reads an AFL that defines the store location of the necessary information according to a predetermined procedure, and accesses the store location.

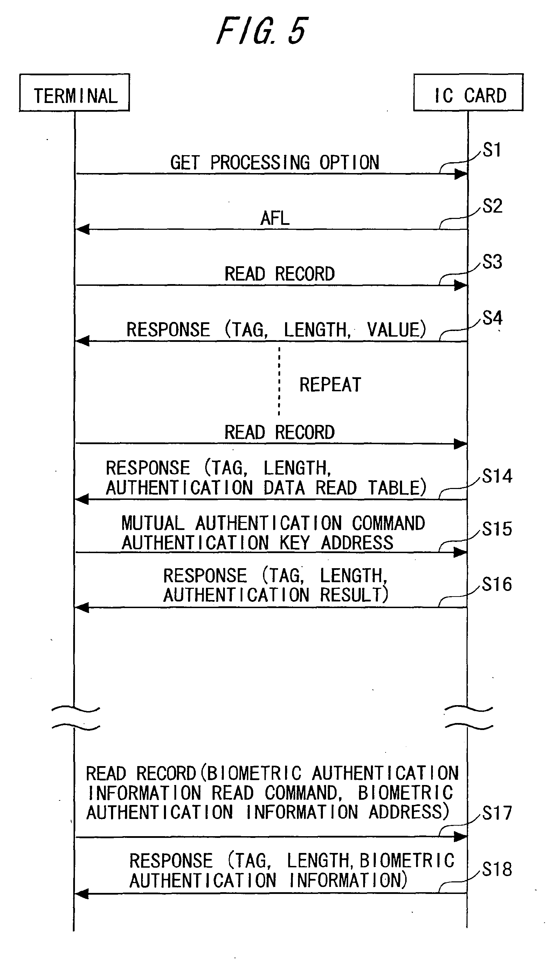

<Outline of Data Reading Procedure>
FIG. 5 shows the outline of a procedure of reading data from the IC card 10. In this information system, insertion of the IC card 10 in the card insertion slot of the terminal prompts the terminal to issue a GPO (Get Processing Option) command, which instructs the IC card 10 to start up processing (S1).

Receiving the start-up instruction from the terminal, the IC card 10 sends an AFL to the terminal in response (S2). The CPU 11 of the IC card 10 which executes this step corresponds to a unit sending store location definition information in response.

The terminal reads a tag of the received information and identifies the information as an AFL. Then the terminal sends a read command (Read Record command) designating the head AFL row (S3). The CPU of the terminal which executes this step corresponds to a unit requesting a user authentication apparatus to provide information.

The IC card 10 reads information at a store location defined in the AFL row that is designated in the read command and sends the information to the terminal (S4). The CPU 11 of the IC card 10 which executes this step corresponds to an output unit. The CPU of the terminal which receives this information corresponds to an information reading unit. The information contains a tag, a length, and a value. The processing of Steps S3 and S4 is executed once or more.

In some cases, information sent from the IC card 10 to the terminal in response to a specific command contains an authentication information read table (S14). In such a case, the terminal recognizes, from the tag, that the information contains an authentication information read table.

Recognizing reception of an authentication information read table, the terminal follows a set format to specify and read information it needs. For instance, in processing of Step S15, the terminal sends a mutual authentication command designating the address of a mutual authentication key (S15). The IC card 10 sends authentication results in response (S16). In another example, the terminal sends a read command designating the address of biometric information (e.g., Data One of FIG. 4) (S17) .

The IC card 10 sends, in response, biometric authentication information in the IC card 10 to the terminal. The terminal prompts the customer to, for example, have an image of his left hand's blood vessel pattern picked up. When the customer holds his left hand over the image pick-up unit 31, a blood vessel image is picked up to create biometric authentication information. The terminal compares the created biometric authentication information against the biometric authentication information sent from the IC card 10 to execute biometric authentication.

As has been described, in the information system of this embodiment, the terminal can not only read information out of the IC card 10 in the usual fashion which employs AFL but also read authentication information by accessing desired authentication information with the use of an authentication information read table. The terminal therefore can single out and access desired authentication information from among several types of authentication information stored in the IC card 10 without reading all of the stored authentication information.

For instance, even in the case where the IC card 10 stores two or more types of biometric authentication information, one of the two or more types of stored biometric authentication information, or two or more of the stored biometric authentication information types can be chosen as necessary to execute biometric authentication. Also, in this case, only necessary information can be chosen and read. Thus unnecessary reading processing is eliminated and authentication processing is executed with efficiency even when data to be read out of the IC card 10 contains a relatively large amount of information as in biometric authentication information.

<Modification Example>
In the embodiment described above, the terminal reads biometric authentication information out of the IC card 10 and executes biometric authentication. The present invention, however, is not limited to this configuration and procedure. For instance, the IC card 10 may execute biometric authentication upon request from the terminal while the terminal designates the store location in the IC card 10 of biometric authentication information, creates customer's biometric authentication information, and sends the created biometric authentication information to the IC card 10.

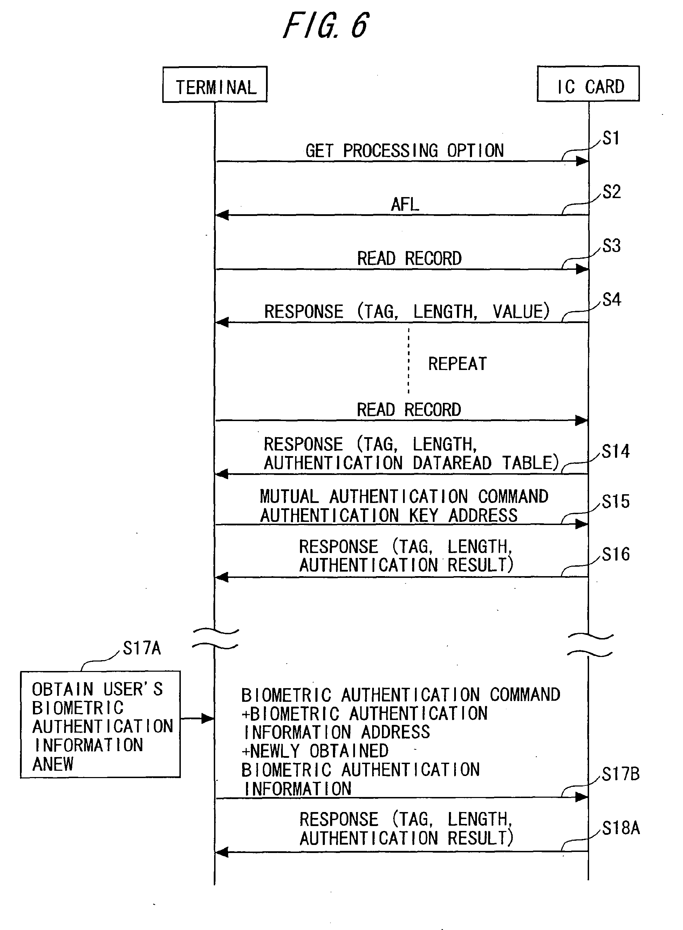

FIG. 6 shows a procedure of executing biometric authentication in the IC card 10. This procedure is identical to the procedure of FIG. 5 from Steps S1 through S16, and descriptions of those steps will be omitted here. The terminal uses, before asking the IC card 10 to perform biometric authentication, the image pick-up device 31 or 41 to pick up an image of blood vessels on a palm and creates biometric authentication information from the picked-up image (S17A) .

Next, the terminal issues a biometric authentication command to request the IC card 10 to perform biometric authentication. The biometric authentication command designates the information in a given AFL row of the authentication information read table that has been read in Step S14, for example, the store location address of biometric authentication information stored in the IC card 10 in the past, and the biometric authentication information newly obtained in Step S17A (S17B). The CPU of the terminal which executes this step corresponds to a requesting unit.

The IC card 10 sends, in response, results of biometric authentication along with a tag (S18A).

As has been described, the use of the authentication information read table makes efficient biometric authentication possible also when the biometric authentication is executed in the IC card 10. In information exchange between the terminal and the IC card 10 which simply employs AFL, the terminal has to read an information store location designated by each AFL row that is contained in an AFL, and has to check information read from a tag of the AFL. On the other hand, once reading the authentication information read table, the terminal reads desired authentication information out of the IC card 10 as determined in the authentication information read table, or can ask the IC card 10 to perform authentication with desired authentication information.

<Computer-readable Recording Medium>
A program to have a computer or other machine or apparatus (hereinafter referred to as computer or the like) execute any one of the functions described above can be recorded in a recording medium (also called a storage medium) read by a computer or the like. The computer or the like reads a program in the recording medium and executes the program to present the function.

A recording medium readable by a computer or the like is a recording medium in which data, programs, or other information is accumulated through an electric, magnetic, optical, mechanical or chemical action to be read by a computer or the like. A recording medium readable by a computer or the like may contain computer components such as a CPU and a memory, so that a recorded program is executed by the CPU.

Of such recording media, flexible disks, magneto-optical disks, CD-ROMs, CD-R/Ws, DVDs, DATs, 8-mm tapes, memory cards, etc. are detachable from a computer or the like.

Recording media fixed to a computer or the like are hard disks, ROMs (read-only memories), and the like.

Although the above description refers to an IC card by way of example, the user authentication apparatus of the present invention need not be in card form, but may be in any portable form or built into other portable apparatus.

## Claims

1. A user authentication apparatus comprising:
a unit storing biometric authentication information;
a unit communicating with an electronic equipment which checks the validity of user's biometric authentication information;
a unit sending, in response to a first inquiry from the electronic equipment, store location definition information which defines store locations of various output information; and
an output unit outputting, in response to a read request from the electronic equipment which designates a store location defined by the store location definition information, the output information along with identification information which indicates the type of the output information,
wherein the output unit outputs, to the electronic equipment, as one of the output information, authentication information store location information which describes in a given format where authentication information including the biometric authentication information is stored, along with identification information indicating the authentication information store location information.

2. Electronic equipment comprising:
a unit detecting user's biometric authentication information;
a unit communicating with a user authentication apparatus which is used in user authentication;
a unit obtaining, from the user authentication apparatus, store location definition information which defines store locations of various information;
a unit requesting the user authentication apparatus to provide information while designating a store location which is defined in the store location definition information; and
an information reading unit obtaining as the result of the request, from the user authentication apparatus, the information and identification information which indicates an information type,
wherein the information reading unit obtains, as one of the information, authentication information store location information which describes in a given format where authentication information including the biometric authentication information that has previously been obtained is stored, along with identification information indicating the authentication information store location information, and the information reading unit reads the biometric authentication information out of the user authentication apparatus in accordance with the authentication information store location information.

3. Electronic equipment comprising:
a unit detecting user's biometric authentication information;
a unit communicating with a user authentication apparatus which is used in user authentication;
a unit obtaining, from the user authentication apparatus, store location definition information which defines store locations of various information;
a unit requesting the user authentication apparatus to provide information while designating a store location which is defined in the store location definition information;
an information reading unit obtaining, as the result of the request, from the user authentication apparatus, the information and identification information which indicates an information type; and
a requesting unit when obtaining, as one of the information, authentication information store location information which describes in a given format where authentication information including the biometric authentication information that has previously been obtained is stored, along with identification information indicating the authentication information store location information, designating the location where the biometric authentication information is stored in accordance with the authentication information store location information, and requesting the user authentication apparatus to check the biometric authentication information detected against biometric authentication information stored in the designated location.

4. A user authentication method comprising:
a step storing biometric authentication information;
a step sending, in response to a first inquiry from an electronic equipment which authenticates user's biometric authentication information, store location definition information which defines store locations of various output information; and
an output ,step sending, in response to a read request sent from the electronic equipment which designates a store location defined by the store location definition information, the output information along with identification information which indicates the type of the output information,
wherein the output step includes a step outputting, authentication information store location information which describes in a given format where authentication information including the biometric authentication information that has previously been obtained is stored, as one of the output information to the electronic equipment along with identification information indicating the authentication information store location information.

5. A user authentication method comprising:
a step detecting user's biometric authentication information;
a step obtaining, from a user authentication apparatus which is used for user authentication, store location definition information which defines store locations of various information;
a step requesting the user authentication apparatus to provide information while designating a store location that is defined in the store location definition information; and
an information reading step obtaining, as the result of the request, the information along with identification information which indicates the type of the information,
wherein the information reading step includes a step obtaining, as one of the information, authentication information store location information which describes in a given format where authentication information including the biometric authentication information is stored, along with identification information indicating the authentication information store location information, and a step reading the biometric authentication information out of the user authentication apparatus in accordance with the authentication information store location information.

6. A user authentication method comprising:
a step detecting user's biometric authentication information;
a step obtaining, from a user authentication apparatus which is used in user authentication, store location definition information which defines store locations of various information;
a step requesting the user authentication apparatus to provide information while designating a store location which is defined in the store location definition information;
an information reading step obtaining, as the result of the request, from the user authentication apparatus, the information and identification information which indicates an information type; and
a requesting step, when obtaining, as one of the information, authentication information store location information which describes in a given format where authentication information including the biometric authentication information that has previously been obtained is stored, along with identification information indicating the authentication information store location information, designating the location where the biometric authentication information is stored in accordance with the authentication information store location information, and requesting the user authentication apparatus to check the biometric authentication information detected against biometric authentication information stored in the designated location.

7. A user authentication program causing a computer to execute:
a step storing biometric authentication information;
a step sending, in response to a first inquiry from an electronic equipment which authenticates user's biometric authentication information, store location definition information which defines store locations of various output information; and
an output step outputting, in response to a read request sent from the electronic equipment which designates a store location defined by the store location definition information, the output information along with identification information which indicates the type of the output information,
wherein the output step includes a step outputting authentication information store location information which describes in a given format where authentication information including the biometric authentication information that has previously been obtained is stored, as one of the output information to the electronic equipment along with identification information indicating the authentication information store location information.

8. A user authentication program causing a computer to execute:
a step detecting user's biometric authentication information;
a step obtaining, from a user authentication apparatus which is used in user authentication, store location definition information which defines store locations of various information;
a step requesting the user authentication apparatus to provide information while designating a store location which is defined in the store location definition information; and
an information reading step obtaining, as the result of the request, from the user authentication apparatus, the information and identification information which indicates an information type,
wherein the information reading step includes a step obtaining, as one of the information, authentication information store location information which describes in a given format where authentication information including the biometric authentication information that has previously been obtained is stored, along with identification information indicating the authentication information store location information, and a step reading the biometric authentication information out of the user authentication apparatus in accordance with the authentication information store location information.

9. A user authentication program causing a computer to execute:
a step detecting user's biometric authentication information;
a step obtaining, from a user authentication apparatus which is used for user authentication, store location definition information which defines store locations of various information;
a step requesting the user authentication apparatus to provide information while designating a store location that is defined in the store location definition information;
an information reading step obtaining, as the result of the request, the information along with identification information which indicates the type of the information; and
a requesting step, when obtaining, as one of the information, authentication information store location information which describes in a given format where authentication information including the biometric authentication information that has previously been obtained is stored, along with identification information indicating the authentication information store location information, designating the location where the biometric authentication information is stored in accordance with the authentication information store location information, and requesting the user authentication apparatus to check the biometric authentication information detected against biometric authentication information stored in the designated location.

10. An IC card comprising:
a storing unit for storing biometric authentication information;
a unit communicating with an electronic equipment which checks the validity of user's biometric authentication information;
a unit sending, in response to a first inquiry from the electronic equipment, store location definition information which defines store locations of various output information; and
an output unit outputting, in response to a read request which designates a store location defined by the store location definition information, the output information along with identification information which indicates the type of the output information,
wherein the output unit outputs, to the electronic equipment as one of the output information, authentication information store location information which describes in a given format where authentication information including the biometric authentication information is stored, along with identification information indicating the authentication information store location information.
